# EUROPEAN PATENT APPLICATION

(11) **EP 4 342 663 A1**
(43) Date of publication of application: **27.03.2024**
(21) Application number: 22804351.9
(22) Date of filing: 17.03.2022
(51) Int. Cl.: B29C 73/04, C08J 5/24, E04G 23/02

(54) **METHOD FOR REINFORCING AND REPAIRING STRUCTURE, AND STRUCTURE**

(30) Priority: 18.05.2021 JP 2021083694
(71) Applicant: DIC Corporation, Tokyo 174-8520 (JP)
(72) Inventor: SHINCHI Tomoaki, Takaishi-shi, Osaka 592-0001 (JP)
(74) Representative: TBK
(86) International application number: PCT/JP2022/012140
(87) International publication number: WO 2022/244432

(57) **Abstract**

Provided is a method for reinforcing and repairing a structure. The method includes: a) a step of stacking and shaping a prepreg according to the shape of a surface of the structure; b) a step of vacuum-pressurizing the stacked and shaped prepreg; c) a step of heating and curing the vacuum-pressurized prepreg to produce a cured product of the prepreg; and d) a step of bonding the cured product to the surface of the structure. The prepreg includes: a resin composition including an ethylenically unsaturated group-containing resin (A) and a polymerization initiator (B); and reinforcement fibers (C). The polymerization initiator (B) has a 10-hour half-life temperature of 60°C to 75°C. This method for reinforcing and repairing the structure allows a structure having excellent workability and excellent mechanical strength to be obtained, and therefore, the obtained structure is applicable to automobile components, railway vehicle components, aerospace craft components, ship components, housing equipment components, sporting components, light vehicle components, building and civil engineering components, casings of OA equipment, and the like.

## Description

### Technical Field

The present invention relates to a method for reinforcing and repairing a structure, and a structure obtained by the method for reinforcing and repairing the structure.

### Background Art

Reinforcement fiber composite materials reinforced with reinforcement fibers such as carbon fibers and glass fibers have been receiving attention because the reinforcement fiber composite materials have the characteristics of excellent heat resistance and mechanical strength despite light weight. The reinforcement fiber composite materials have been increasingly used in various structures, including casings and various components of automobiles and aircraft, and have been increasingly demanded in repairing civil engineering and building materials.

Examples of a method for molding a reinforcement fiber composite material include a method in which an intermediate material referred to as a prepreg obtained by impregnating reinforcement fibers with a thermosetting resin is used to be cured and molded by autoclave molding or press molding.

For repairing civil engineering and building materials, there have been used a hand lay-up method in which a carbon fiber sheet is bonded to a portion to be repaired and is impregnated with a cold-setting resin and a molding method in which a molded reinforcement fiber composite plate is bonded to a portion to be repaired by an adhesive.

Resins for the prepreg are usually required to have both stability at normal temperature and curability by heating or the like. Thus, in general, thermosetting resins such as epoxy resin compositions have been frequently used. However, the curing reaction of a prepreg including epoxy resin is slow and accordingly the prepreg requires a high molding temperature, and, furthermore, curing of the prepreg gradually progresses even at normal temperature and accordingly the prepreg needs to be stored under refrigeration to delay the curing. Therefore, a radically polymerizable resin composition capable of achieving high productivity and stability at normal temperature has been under development.

As a method for reinforcing and repairing an existing or newly constructed structure, there has been employed a method in which a reinforcing fiber sheet impregnated with thermosetting resin is bonded to or wrapped around a surface of the structure and then subjected to curing at normal temperature to reinforce and repair the structure (see PTL 1) .

In recent years, a reinforcement and repair method in which a reinforcement fiber sheet is bonded or wrapped and then impregnated with an adhesive impregnation resin such as epoxy resin has also been put to practical use. However, to sufficiently reinforce a structure, it is necessary to stack and bond reinforcement fiber sheets in layers, which requires a long construction period. In addition, there has arisen a problem, for example, in that, since the impregnation of reinforcement fiber sheets with the resin is performed at a construction site, the degree of resin impregnation varies depending on the skill level of a worker and other factors, hence, reinforcement and repair effects cannot be stably achieved.

There has been another method in which a fiber sheet in which continuous fiber bundles are impregnated with an uncured matrix resin is bonded and then cured. However, this method has a problem in that, when the matrix resin is cured by heat, long-time curing at high or low temperature is required, while in the case of the curing at high temperature, heating equipment and keeping high temperature are needed, which makes on-site construction difficult, and in the case of the curing at low temperature, a long construction period is required.

Furthermore, there has been developed an FRP plate bonding method in which, to omit on-site resin impregnation, a factory-produced fiber-reinforced plastic plate is bonded using a putty adhesive resin. However, this method has a problem in that since the fiber-reinforced plastic plate is used, it is incapable of reinforcing and repairing a structure having an uneven or curved surface.

### Citation List

### Patent Literature

PTL 1: Japanese Unexamined Patent Application Publication No. H9-296615

### Summary of Invention

### Technical Problem

An object of the present invention is to provide a method for reinforcing and repairing a structure, the method excelling in the reduction of a construction period and the improvement of workability, and a structure obtained by using the method for reinforcing and repairing the structure and having excellent mechanical strength.

### Solution to Problem

The inventors of the present invention found a method for reinforcing and repairing a structure, in which bonding a cured product obtained by curing a specific prepreg under specific conditions to the structure leads to the reduction of a construction period and the improvement of workability owing to the fast curability (short-time curability) and low temperature curability of the prepreg, and integrally bonding the cured product to a surface of the structure leads to the achievement of a structure having sufficient mechanical strength for reinforcement and repair. Thus, the inventors completed the present invention.

Specifically, the present invention relates to a method for reinforcing and repairing a structure, the method comprising:
a) a step of stacking and shaping a prepreg according to the shape of a surface of the structure;
b) a step of vacuum-pressurizing the stacked and shaped prepreg;
c) a step of heat-curing the vacuum-pressurized prepreg to produce a cured product of the prepreg; and
d) a step of bonding the cured product to the surface of the structure, wherein

the prepreg includes: a resin composition including an ethylenically unsaturated group-containing resin (A) and a polymerization initiator (B); and reinforcement fibers (C), and
the polymerization initiator (B) has a 10-hour half-life temperature 60°C C to 75°C.

In the method for reinforcing and repairing the structure according to the present invention, the ethylenically unsaturated group-containing resin (A) is preferably urethane (meth)acrylate and/or epoxy (meth)acrylate.

In the method for reinforcing and repairing the structure according to the present invention, the urethane (meth)acrylate is preferably a reaction product of a polyisocyanate compound and a hydroxyl group-containing compound including a compound having a hydroxyl group and a (meth)acryloyl group.

In the method for reinforcing and repairing the structure according to the present invention, the polyisocyanate compound is preferably at least one polyisocyanate selected from the group consisting of 2,4'-diphenylmethane diisocyanate, 4,4'-diphenylmethane diisocyanate, carbodiimide-modified 4,4'-diphenylmethane diisocyanate, and polymethylene polyphenyl polyisocyanate.

In the method for reinforcing and repairing the structure according to the present invention, the gel time (at 100°C) of the prepreg is preferably 50 seconds to 350 seconds.

In the method for reinforcing and repairing the structure according to the present invention, the prepreg is preferably cured at 120°C or lower within 15 minutes.

In the method for reinforcing and repairing the structure according to the present invention, the melt viscosity (at 100°C) of the resin composition is preferably 0.4 Pa·s to 900 Pa·s in a dynamic viscoelasticity measurement performed at a temperature increase rate of 15°C/min and a frequency of 1 Hz.

The present invention relates to a structure characterized by being obtained using the method for reinforcing and repairing the structure.

### Advantageous Effects of Invention

The method for reinforcing and repairing a structure according to the present invention is useful because a specific prepreg for the structure is used to integrate the structure and a cured product obtained by using the prepreg under specific conditions, workability can be improved, and furthermore, the structure having sufficient mechanical strength for reinforcement and repair can be achieved. Description of Embodiments

### [Prepreg]

A prepreg to be used in the present invention includes: a resin composition including an ethylenically unsaturated group-containing resin (A) and a polymerization initiator (B); and reinforcement fibers (C), and is characterized in that the polymerization initiator (B) has a 10-hour half-life temperature of 60°C to 75°C. The prepreg is useful because, using the reinforcement fibers (C), a cured product obtained from the prepreg is integrated with a structure, so that the structure has excellent mechanical strength, and furthermore, the half-life temperature of the polymerization initiator (B) included in the resin composition is within the above-described range, so that low temperature curability and fast curability (short-time curability), which are advantageous for construction, can be realized.

### [Ethylenically unsaturated group-containing resin (A)]

The ethylenically unsaturated group-containing resin (A) is not limited to a particular one and may be a polymer or a monomer, and is preferably, for example, urethane (meth)acrylate and/or epoxy (meth)acrylate. Besides the urethane (meth)acrylate and/or the epoxy (meth)acrylate, the ethylenically unsaturated group-containing resin (A) may include, for example, a styrene compound, a monofunctional (meth)acrylate compound, a hydroxyl group-containing (meth)acrylate compound, a di(meth)acrylate compound, and unsaturated polyester, and these can be used alone or in combination of two or more. The use of these ethylenically unsaturated group-containing resins (A) allows the resulting prepreg to have excellent workability and excellent moldability, and thus leads to the achievement of a molded article having excellent physical properties such as heat resistance, which is preferred.

### [Epoxy (meth)acrylate]

The epoxy (meth)acrylate can be obtained by allowing an epoxy resin to react with (meth)acrylic acid and/or (meth)acrylic anhydride. The use of the epoxy (meth)acrylate allows the resulting prepreg to have excellent workability and excellent moldability, and thus leads to the achievement of a molded article having excellent physical properties such as heat resistance, which is preferred. Examples of the epoxy resin used in the epoxy (meth)acrylate include bisphenol epoxy resins, novolac epoxy resins, and oxazolidone-modified epoxy resins.

### [Urethane (meth)acrylate]

The urethane (meth)acrylate is preferably a reaction product of a polyisocyanate compound and a hydroxyl group-containing compound including a compound having a hydroxyl group and a (meth)acryloyl group. The use of the urethane (meth)acrylate allows the resulting prepreg to have excellent workability and excellent moldability, and thus leads to the achievement of a molded article having excellent physical properties such as heat resistance, which is preferred. From the viewpoint of obtaining the molded article having excellent physical properties such as heat resistance, examples of the urethane (meth)acrylate include urethane (meth)acrylates including polymethylene polyphenyl polyisocyanate, 4,4-diphenylmethane diisocyanate, hydroxyalkyl (meth)acrylate, and alkylene oxide adducts of bisphenol A.

The polyisocyanate compound is preferably at least one polyisocyanate selected from the group consisting of 2,4'-diphenylmethane diisocyanate, 4,4'-diphenylmethane diisocyanate, carbodiimide-modified 4,4'-diphenylmethane diisocyanate, and polymethylene polyphenyl polyisocyanate. The use of the polyisocyanate allows the resulting urethane (meth)acrylate to lead to the achievement of a molded article having excellent physical properties such as heat resistance, which is preferred. Furthermore, the use of the polymethylene polyphenyl polyisocyanate among the polyisocyanate compounds results in the achievement of a prepreg having enhanced adhesion to the reinforcement fibers (C) owing to an aromatic ring polynuclear structure of polymethylene polyphenyl polyisocyanate having high affinity to surfaces of the reinforcement fibers (C), and results in the achievement of a cured product using the prepreg.

The polymethylene polyphenyl polyisocyanate is represented by the following general formula (1). Note that the polymethylene polyphenyl polyisocyanates can be used alone or in combination of two or more. 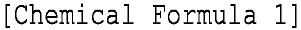 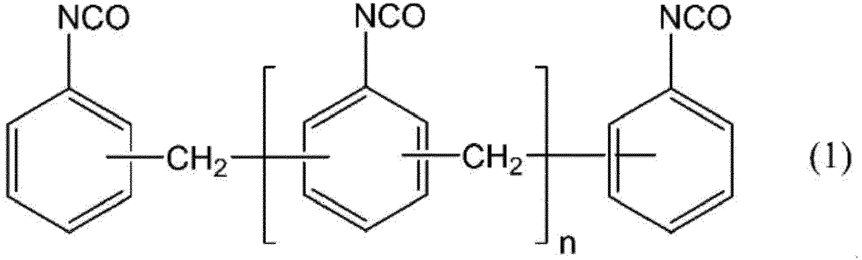 (where n is an integer not less than 1.)

Examples of a commercially available product that can be used as the polyisocyanate compound including the polymethylene polyphenyl polyisocyanate include "Millionate MR-100" and "Millionate MR-200", manufactured by Tosoh Corporation, "WANNATE PM-200" and "WANNATE PM-400", manufactured by Wanhua Chemical Group Co., Ltd., "COSMONATE M-1500", manufactured by Mitsui Chemicals, Inc., and "VORANATE M-595", manufactured by The Dow Chemical Company.

Besides the polymethylene polyphenyl polyisocyanate, the polyisocyanate compound may include diphenylmethane diisocyanate (MDI). The use of diphenylmethane diisocyanate (MDI) allows the cross-linking density of the resulting urethane (meth)acrylate to be adjusted, and thus leads to the achievement of a cured product having excellent toughness, which is preferred.

The diphenylmethane diisocyanate (MDI) is preferably at least one selected from the group consisting of 2,4'-diphenylmethane diisocyanate, 4,4'-diphenylmethane diisocyanate, and carbodiimide-modified 4,4'-diphenylmethane diisocyanate.

Furthermore, besides the polymethylene polyphenyl polyisocyanate and the diphenylmethane diisocyanate, use can be made of aromatic polyisocyanates, such as nurate-modified diphenylmethane diisocyanate, biuret-modified diphenylmethane diisocyanate, urethane imine-modified diphenylmethane diisocyanate, polyol-modified diphenylmethane diisocyanates modified with a polyol having a number-average molecular weight of 1000 or less, such as diethylene glycol or dipropylene glycol, tolylene diisocyanate (TDI), tolidine diisocyanate, polymethylene polyphenyl polyisocyanate, xylylene diisocyanate, 1,5-naphthalene diisocyanate, and tetramethylxylene diisocyanate; alicyclic polyisocyanates, such as isophorone diisocyanate (IPDI), hydrogenated diphenylmethane diisocyanate, hydrogenated xylylene diisocyanate, and norbornene diisocyanate; and aliphatic polyisocyanates, such as hexamethylene diisocyanate, nurate-modified hexamethylene diisocyanate, biuret-modified hexamethylene diisocyanate, hexamethylene diisocyanate adducts, and dimer acid diisocyanate.

The hydroxyl group-containing compound preferably includes a compound having a hydroxyl group and a (meth)acryloyl group. The use of the compound having the hydroxyl group and the (meth)acryloyl group leads to the achievement of urethane (meth)acrylate having excellent workability and moldability and excellent physical properties such as heat resistance, which is useful.

Examples of the compound having the hydroxyl group and the (meth)acryloyl group include hydroxyalkyl (meth)acrylates. Note that these compounds having the hydroxyl groups and the (meth)acryloyl groups can be used alone or in combination of two or more.

Examples of the hydroxyalkyl (meth)acrylate include 2-hydroxyethyl (meth)acrylate, 3-hydroxypropyl (meth)acrylate, 4-hydroxy-n-butyl (meth)acrylate, 2-hydroxypropyl (meth)acrylate, 2-hydroxy-n-butyl (meth)acrylate, and 3-hydroxy-n-butyl (meth)acrylate, and preferred is 2-hydroxyethyl (meth)acrylate. Note that these hydroxyalkyl (meth)acrylates can be used alone or in combination of two or more.

From the viewpoint of heat resistance, the content of the compound having the hydroxyl group and the (meth)acryloyl group in the hydroxyl group-containing compound is preferably within a range of 35% to 75% by mass and more preferably 40% to 70% by mass.

From the viewpoint of heat resistance, the content of the hydroxyl group-containing compound included in the resin composition (solids) used in the prepreg according to the present invention is preferably within a range of 30% to 80% by mass, and more preferably 35% to 75% by mass.

Furthermore, from the viewpoint of further enhancing the toughness and the like of the resulting cured product, the hydroxyl group-containing compound preferably includes the compound having the hydroxyl group and the (meth)acryloyl group and other polyols than the compound.

The other polyols are not limited to particular ones, and examples thereof that can be used include alkylene oxide adducts of bisphenol A, alkylene oxide adducts of aromatic diols, polyester polyols, acrylic polyols, polyether polyols, polycarbonate polyols, and polyalkylene polyols. These polyols can be used alone or in combination of two or more.

The molar ratio (NCO/OH) of an isocyanate group (NCO) of the polyisocyanate compound to a hydroxyl group (OH) of the hydroxyl group-containing compound, each compound being a starting material of the urethane (meth)acrylate, is preferably 0.7 to 1.2, and more preferably 0.9 to 1.0, from the viewpoint of the stability of hardness of the prepreg.

### [Other ethylenically unsaturated group-containing resins (A)]

Examples of other ethylenically unsaturated group-containing resins (A) that can be included (used) together with the urethane (meth)acrylate and the epoxy (meth)acrylate include the styrene compound, such as styrene, methylstyrene, halogenated styrene, and divinylbenzene; the monofunctional (meth)acrylate compound, such as methyl (meth)acrylate, ethyl (meth)acrylate, propyl (meth)acrylate, butyl (meth)acrylate, 2-ethylhexyl (meth)acrylate, cyclohexyl (meth)acrylate, isobornyl (meth)acrylate, benzyl (meth)acrylate, methylbenzyl (meth)acrylate, phenoxyethyl (meth)acrylate, methylphenoxyethyl (meth)acrylate, morpholine (meth)acrylate, phenylphenoxyethyl acrylate, phenylbenzyl (meth)acrylate, phenyl methacrylate, dicyclopentenyl (meth)acrylate, dicyclopentenyloxyethyl (meth)acrylate, and dicyclopentanyl methacrylate; the hydroxyl group-containing (meth)acrylate compound, such as hydroxyethyl (meth)acrylate, hydroxypropyl (meth)acrylate, and hydroxybutyl (meth)acrylate; the di(meth)acrylate compound, such as dimethacrylates of ethylene oxide adducts of bisphenol A, tricyclodecanedimethanol dimethacrylate, 1,12-dodecanediol dimethacrylate, hydrogenated bisphenol A di(meth)acrylate, polytetramethylene glycol dimethacrylate, 9,9-bis [4-(2-methacryloyloxyethoxy)phenyl]fluorene, dimethacrylates of ethylene oxide adducts of isosorbide, dimethacrylates of ethylene oxide adducts of hydrogenated bisphenol A, trimethacrylates of ethylene oxide adducts of trimethylolpropane, tetramethacrylates of ethylene oxide adducts of pentaerythritol, hexamethacrylates of ethylene oxide adducts of dipentaerythritol, ethylene glycol di(meth)acrylate, propylene glycol di(meth)acrylate, 1,4-butanediol di(meth)acrylate, 1,6-hexanediol di(meth)acrylate, bisphenol di(meth)acrylate, and 1,4-cyclohexanedimethanol di(meth)acrylate; and the unsaturated polyester, such as unsaturated polyesters obtained by synthesis using a well-known method by dehydration condensation reaction of a dibasic acid component including α,β-unsaturated dibasic acid, a polyhydric alcohol component, mono alcohols, and the like, and having a number average molecular weight (Mn) preferably within a range of 400 to 5000.

Examples of the α,β-unsaturated dibasic acid to be used for preparing the unsaturated polyester include maleic acid, maleic anhydride, fumaric acid, itaconic acid, and itaconic anhydride. Examples of a saturated dibasic acid include aromatic dibasic acids and halogenated saturated dibasic acids, such as phthalic acid, phthalic anhydride, halogenated phthalic anhydride, isophthalic acid, terephthalic acid, tetrachlorophthalic acid, tetrachlorophthalic anhydride, dimer acid, 2,6-naphthalene dicarboxylic acid, 2,7-naphthalene dicarboxylic acid, 2,3-naphthalene dicarboxylic acid, 2,3-naphthalene dicarboxylic anhydride, 4,4'-biphenyldicarboxylic acid, and dialkyl esters thereof. The above-mentioned saturated dibasic acids may be used alone or in combination of two or more. The content of an unsaturated dibasic acid component and the content of a saturated dibasic acid component in all the dibasic acids are preferably 70 mol% to 100 mol% and 0 mol% to 30 mol%, respectively. Examples of the polyhydric alcohol can include adducts of dihydric phenol and alkylene oxide, typical examples of the dihydric phenol including ethylene glycol, diethylene glycol, triethylene glycol, polyethylene glycol, propylene glycol, dipropylene glycol, polypropylene glycol, 1,3-propanediol, 1,3-butanediol, neopentyl glycol, hydrogenated bisphenol A, 1,4-butanediol, 2-methyl-1,4-butanediol, 2-ethyl-1,4-butanediol, 1,5-pentanediol, cyclohexanedimethanol, 2,2,4-trimethyl-1,3-pentanediol, 1,6-hexanediol, bisphenol A, bisphenol F, bisphenol S, and tetrabromobisphenol A, typical example of the alkylene oxide including propylene oxide and ethylene oxide; 1,2,3,4-tetrahydroxybutane, glycerin, trimethylolpropane, pentaerythritol, 1,2-cyclohexane glycol, 1,3-cyclohexane glycol, 1,4-cyclohexane glycol, 1,4-cyclohexane dimethanol, paraxylene glycol, bicyclohexyl-4,4'-diol, 2,6-decalin glycol, 2,7-decalin glycol, 2-ethyl-2-butyl-1,3-propanediol, 2-methyl-1,3-propanediol, and 3-methyl-1,5-pentanediol. The above-mentioned polyhydric alcohols are preferably used in combination of two or more.

### [Polymerization initiator (B)]

The polymerization initiator (B) has a 10-hour half-life temperature of 60°C to 75°C, preferably 60°C to 70°C. The polymerization initiator (B) is not limited to a particular polymerization initiator, but is preferably an organic peroxide from the viewpoint of stability at normal temperature (23°C) and the low-temperature curability and the reduction of molding time (fast curability) of a cured product obtained from the prepreg including the polymerization initiator (B).

Examples of the organic peroxide include diacyl peroxide compounds, peroxy ester compounds, hydroperoxide compounds, ketone peroxide compounds, alkyl perester compounds, percarbonate compounds, and peroxyketals. These organic peroxides can be suitably selected in accordance with molding conditions. Note that the polymerization inhibitor (B) can be used alone or in combination of two or more kinds.

The 10-hour half-life temperature of the organic peroxide is preferably within a range of 60°C to 75°C because the prepreg has a long service life at normal temperature, and can be cured in a short time (within 15 minutes) by heating (fast curability), and has low-temperature curability, which is advantageous to the construction. The use of the prepreg according to the present invention leads to more excellent curability and moldability. Examples of such polymerization initiator include 1,1,3,3-tetramethylbutylperoxy-2-ethylhexanoate, tert-butylperoxy-2-ethylhexanoate, t-butylperoxyisobutyrate, tert-amylperoxyisobutyrate, tert-amyl peroxy-2-ethylhexanoate, diisononanoyl peroxide, dilauroyl peroxide, dibenzoyl peroxide, disuccinic acid peroxide, 2,5-dimethyl-2,5-hexanediyl=bis(2-ethylperoxyhexanoate), tert-hexyl peroxy-2-ethyl hexanoate, and tert-butyl peroxydiethylacetate. Among them, organic peroxides having a 10-hour half-life temperature of 60°C to 70°C, such as 1,1,3,3-tetramethylbutyl peroxy-2-ethyl hexanoate, dilauroyl peroxide, dicuccinic acid peroxide, 2,5-dimethyl-2,5-hexanediyl=bis(2-ethylperoxyhexanoate), and tert-hexylperoxy-2-ethylhexanoate, are preferred, and 1,1,3,3-tetramethylbutylperoxy-2-ethylhexanoate is particularly preferred.

The content of the polymerization initiator (B) in the resin composition (solids) used in the prepreg according to the present invention is preferably within a range of 0.3% by mass to 3.0% by mass and more preferably 0.5% by mass to 2.5% by mass, from the viewpoint of achieving both excellent curability and excellent storage stability.

### [Resin composition]

The melt viscosity (at 100°C) of the resin composition used in the prepreg according to the present invention is preferably 0.4 Pa·s to 900 Pa·s, and more preferably 1 Pa·s to 450 Pa·s in a dynamic viscoelasticity measurement performed at a temperature increase rate of 15°C/min and a frequency of 1 Hz by using a viscoelasticity measuring device (MCR302, manufactured by Anton Paar Japan K.K., 25-mm-diameter measurement jig). When the melt viscosity is within the above-mentioned range, a stable product weight (mass) is achieved when the reinforcement fibers (C) are coated and impregnated with the resin composition, and accordingly the product quality of the resulting prepreg is stable (product stability), which is useful.

### [Reinforcement fibers (C)]

The reinforcement fibers (C) are not limited to particular ones, but, from the viewpoint of mechanical strength and durability, as the reinforcement fibers (C), carbon fibers can be preferably used. From the viewpoint of obtaining high-strength carbon fibers, polyacrylonitrile-based, pitch-based, rayon-based carbon fibers, and the likes can be more preferably used. Among them, from the viewpoint of easily obtaining high-strength carbon fibers, polyacrylonitrile-based carbon fibers are preferable.

The form of the reinforcement fibers (C) is not particularly limited, and examples thereof include reinforcement fiber tows in which reinforcement fiber filaments are bundled together, unidirectional fiber materials in which reinforcement fiber tows are arranged in parallel in one direction, and woven fabrics or nonwoven fabrics formed of reinforcement fibers cut into short lengths. When unidirectional fiber materials are used as the reinforcement fibers and stacked and molded, high mechanical properties can be achieved, which is preferred.

Examples of the woven fabrics include plain fabrics, twill fabrics, satin fabrics, and stitched sheets as represented by non-crimped fabrics in which sheets formed of fiber bundles arranged in parallel in one direction or sheets stacked at different stacking angles are stitched together in order to avoid separation.

The content of the reinforcement fibers (C) in the prepreg according to the present invention is preferably within a range of 35% to 85% by mass, and more preferably 45% to 75% by mass, from the viewpoint that the mechanical strength of the resulting cured product is further enhanced.

As the component of the prepreg according to the present invention, components other than those described above may be used. Examples of the components that can be incorporated into the prepreg include thermosetting resins, thermoplastic resins, polymerization inhibitors, curing accelerators, fillers, low profile additives, mold release agents, thickeners, viscosity depressants, pigments, antioxidants, plasticizers, flame retardants, antimicrobial agents, ultraviolet stabilizers, reinforcement materials, and photo-curing agents.

### [Prepreg]

The prepreg according to the present invention is formed in an uncured or semi-cured state by using the resin composition having been subjected to reaction. A cured product obtained using the prepreg according to the present invention can realize low-temperature curability and fast curability (short-time curability) and thereby excels in the reduction of a construction period and the improvement of workability, which is preferred.

### [Method for producing prepreg]

A method for producing the prepreg is not limited to a particular one, but a known method can be employed. For example, the prepreg can be obtained in such a manner that, by using a known mixer such as a planetary mixer or a liquid mixing device, the ethylenically unsaturated group-containing resin (A) (for example, urethane (meth)acrylate, which is a reaction product of a polyisocyanate compound and a hydroxyl group-containing compound including a compound having a hydroxyl group and a (meth)acryloyl group), the polymerization initiator (B) (for example, organic peroxide), and other components (for example, a polyol equivalent to the hydroxyl group-containing compound) are mixed to obtain a resin composition (solution), and the reinforcement fibers (C) (for example, carbon fibers) are impregnated with the obtained resin composition, and furthermore, the resulting product is sandwiched between release paper or release films from above and rolled by a rolling machine to obtain a sheet (step 1), and subsequently, an isocyanate group of the polyisocyanate compound is allowed to react with a hydroxyl group of the hydroxyl group-containing compound (for example, hydroxyalkyl (meth)acrylate and also the polyol)(step 2). The reaction conditions are such that the reaction temperature is approximately 40°C to 80°C and the reaction time is approximately 1 minute to 30 minutes. Furthermore, at the step 1, within a range not impairing the impregnation into the reinforcement fibers (C), there can be used what is obtained by allowing the polyisocyanate and the hydroxyl group-containing compound to partially react in advance. Furthermore, the prepreg sandwiched between release paper and the likes is subjected to aging at a temperature of 10°C to 50°C for 12 hours to 48 hours (step 3), whereby the prepreg used for the preparation of the cured product can be obtained.

The thickness of the prepreg according to the present invention is preferably 15 µm to 1000 µm, and more preferably 20 µm to 500 µm. When the prepreg is prepared to have the above-mentioned range of thickness, handling becomes easy in the stacking of the prepreg and impregnation with the resin composition becomes sufficient, which is preferred.

The prepreg is preferably curable at a heating temperature of 120°C or lower within 15 minutes as a heating time, more preferably at a heating temperature of 115°C or lower within 12 minutes as a heating time. When the heating temperature and the heating time for the curing are within the above-mentioned respective ranges, low-temperature curability and fast curability (short-time curability) can be realized, and thereby the reduction of the construction period and the improvement of workability can be achieved, which is preferred.

The gel time (at 100°C) of the prepreg is preferably 50 seconds to 350 seconds, and more preferably 70 seconds to 320 seconds. The gel time within the above-mentioned range leads to the achievement of excellent workability and excellent moldability, which is preferred.

### [Structure]

The present invention relates to a structure characterized by being obtained using the method for reinforcing and repairing the structure. When the structure is integrated with a cured product of the prepreg, the structure has excellent mechanical strength and excellent durability, which is preferred.

### [Method for reinforcing and repairing structure]

The present invention relates to a method for reinforcing and repairing a structure, the method comprising the following steps of:
a) stacking and shaping a prepreg according to the shape of a surface of the structure;
b) vacuum-pressurizing the stacked and shaped prepreg;
c) heat-curing the vacuum-pressurized prepreg to produce a cured product of the prepreg; and
(d) bonding the cured product to the surface of the structure.

The method for reinforcing and repairing the structure will be described in more detail. First, the prepreg including reinforcement fibers is stacked and shaped according to the shape of a surface of the structure, whereby the prepreg matching the shape of the surface is prepared (step a)).

Subsequently, the prepreg matching the shape of the surface is placed into a vacuum pack or the like and vacuum-pressurized, whereby the vacuum-packed prepreg is prepared while the shape of the prepreg is maintained (step b)).

The vacuum-pressurized prepreg is heated to accelerate a curing reaction, whereby a cured product of the prepreg is prepared (step c)).

The obtained cured product present in the vacuum pack is taken out from the vacuum pack. Note that the vacuum-packing and curing allow the cured product matching the shape of the surface to be obtained.

Then, by using an adhesive, the cured product matching the shape of the surface is bonded (joined) to the surface of the structure that needs to be reinforced or repaired, whereby the structure and the cured product are integrated into one (steps d)).

Using the method for reinforcing and repairing the structure that includes the above-described steps a) to d), the cured product is, for example, bonded so as to match the surface shape of a defective or chipped portion, whereby the structure can be reinforced and repaired and thus the structure has excellent mechanical strength, which is useful.

In addition, unlike conventional methods, there is no need to impregnate a reinforcement fiber sheet with an adhesive impregnating resin such as epoxy resin after the attachment of or wrapping with the reinforcement fiber sheet, and hence, excellent workability and a shorter construction period can be achieved, and furthermore, the use of the prepreg having been already impregnated with the resin allows stable effects of reinforcement and repair to be obtained, which is useful.

### [Adhesive]

As the adhesive, a known adhesive can be used. For example, a two-part adhesive including epoxy resin or the like can be used. Specific examples of the adhesive include a cold-setting two-part epoxy adhesive manufactured by ThreeBond Co., Ltd. and a cold-setting two-component adhesive including epoxy resin and silicone polymer as main components, manufactured by Konishi Co., Ltd.

### [Preparation of Cured Product]

A method of preparing a cured product by performing final-curing using the prepreg is such that a plurality of sheets of the prepreg is stacked or shaped so as to match the shape of a surface of the structure, and then vacuum-packed, and the prepreg matching the shape of the surface is heated together with a vacuum pack to perform final-curing, so that the sheets of the prepreg closely adhere to each other, whereby a cured product (a laminate) matching the shape of the surface can be prepared. The ultimate pressure of the vacuum pack is preferably -50 kPa or lower, and more preferably -90 kPa or lower.

A method for obtaining a cured product by using the prepreg is specifically such that 2 to 30 sheets of the prepreg are stacked, and then vacuum-packed at -50 kPa to - 90 kPa, and, after a heating oven or the like is preheated to a temperature of 100°C to 160°C, the stacked and vacuum-packed prepreg is placed into the heating oven or the like, and heated and maintained for 1 minute to 5 minutes to cure the prepreg matching the shape of the surface, whereby a cured product can be obtained. Then, for example, a method of removing the cured product from the vacuum pack to obtain the cured product matching the shape of the surface is performed.

### EXAMPLES

Hereinafter, the present invention will be described in more detail by using specific examples.

### [Hydroxyl equivalent]

The hydroxyl equivalent (g/eq) of a polyol or the like to be used was measured by a method conforming to a neutralization titration method specified in JIS K0070 (1992), and the measured value was used. Note that, from the viewpoint of heat resistance, the hydroxyl equivalent of the polyol or the like is preferably 50 g/eq to 400 g/eq, and more preferably 90 g/eq to 300 g/eq.

### <Melt viscosity (at 100°C) of resin composition>

The melt viscosity at 100°C of the resin composition used in the present invention was evaluated by a dynamic viscoelasticity measurement using a viscoelasticity measuring device (MCR302, manufactured by Anton Paar Japan K.K., 25-mm-diameter measurement jig). Note that the dynamic viscoelasticity measurement was performed under the following conditions.
Temperature condition: room temperature (23°C) to 150°C
Temperature increase rate: 15°C/min
Frequency: 1 Hz

The melt viscosity (at 100°C) of the resin composition is preferably 0.4 Pa·s to 900 Pa·s, and more preferably 1 Pa·s to 450 Pa·s.

### [Evaluation of gel time]

From both sides of the prepreg, release films were removed. Then, the gel time (second) of the prepreg from which the release films were removed was measured at 100°C and 110°C by using a laminate of the prepreg obtained by stacking 24 sheets of 5 cm × 5 cm samples cut in accordance with a method conforming to a curing characteristic test specified in JASO M 406-87.

The gel time at 100°C is preferably 50 seconds to 350 seconds, and more preferably 70 seconds to 320 seconds.

The gel time at 110°C is preferably 20 seconds to 300 seconds, and more preferably 30 seconds to 200 seconds.

### [Evaluation of moldability]

20 sheets of the prepreg each were stacked and then vacuum-packed using a vacuum packing device, and placed into an oven preheated to 100°C and to 110°C and held for 10 minutes. The surface of each of the resulting cured products was checked to evaluate moldability, based on the following criteria.
o: Blisters and uncured areas are not present.
×: Blisters or uncured areas are present.

### [Evaluation of interlaminar shear strength]

A specimen of 10 mm wide and 22 mm long was cut out from the cured product obtained as described above. The interlaminar shear strength (Mpa) of the specimen was measured in accordance with JIS K7078, and the adhesion between layers of the cured product was evaluated, based on the following criteria.
∘: 50 MPa or higher
×: lower than 50 MPa

### [Example 1]

### (Preparation of resin composition (1) for prepreg)

50 parts by mass of a mixture of polymethylene polyphenyl polyisocyanate and 4,4'-diphenylmethane diisocyanate ("Millionate MR-200", manufactured by Tosoh Corporation), 50 parts by mass of 4,4'-diphenylmethane diisocyanate, 66 parts by mass of 2-hydroxyethyl methacrylate (HEMA), 25 parts by mass of NEWPOL BPE-20 (manufactured by Sanyo Chemical Industries, Ltd.: EO adduct of bisphenol A, hydroxyl equivalent: 164 g/eq), 31 parts by mass of NEWPOL BPE-40 (manufactured by Sanyo Chemical Industries, Ltd.: EO adduct of bisphenol A, hydroxyl equivalent: 204 g/eq), and 3 parts by mass of a polymerization initiator ("Kayaester TMPO-70" by Kayaku Nouryon Corporation, 1,1,3,3-tetramethylbutyl peroxy-2-ethylhexanoate, 10-hour half-life temperature of 65°C) were mixed at room temperature (23°C), and the resulting mixture was placed into a polyethylene bag and subjected to aging at 45°C for 24 hours to obtain a resin composition (1) for prepreg (melt viscosity at 100°C: 370 Pa·s).

### (Production and evaluation of prepreg (1))

50 parts by mass of a mixture of polymethylene polyphenyl polyisocyanate and 4,4'-diphenylmethane diisocyanate ("Millionate MR-200", manufactured by Tosoh Corporation), 50 parts by mass of 4,4'-diphenylmethane diisocyanate, 66 parts by mass of 2-hydroxyethyl methacrylate (HEMA), 25 parts by mass of NEWPOL BPE-20 (manufactured by Sanyo Chemical Industries, Ltd.: EO adduct of bisphenol A, hydroxyl equivalent: 164 g/eq), 31 parts by mass of NEWPOL BPE-40 (manufactured by Sanyo Chemical Industries, Ltd.: EO adduct of bisphenol A, hydroxyl equivalent: 204 g/eq), and 3 parts by mass of a polymerization initiator ("Kayaester TMPO-70" by Kayaku Nouryon Corporation, 1,1,3,3-tetramethylbutyl peroxy-2-ethylhexanoate, 10-hour half-life temperature of 65°C) were mixed at room temperature (23°C), and the resulting mixture was applied to one surface of a polyethylene terephthalate film having been subjected to mold release treatment (manufactured by NIPPA CORPORATION, 50 µm, silicone mold release treatment). Then, by a hand lay-up method, carbon fibers ("TRK979PQRW", manufactured by Mitsubishi Chemical Corporation) were impregnated to achieve a carbon fiber content of 50% by mass. The same type of a film was placed on the resulting product and then aging was performed at 25°C for one week, whereby a prepreg (1) was produced. The gel time of the prepreg (1) was 90 seconds at 100°C and 30 seconds at 110°C.

### (Production and evaluation of cured product)

20 sheets of the prepreg (1) each were stacked, and then vacuum-packed using a vacuum packing device at an ultimate pressure of -90 kPa, and placed into an oven preheated to 100°C and to 110°C and held for 10 minutes to cure the prepreg, whereby a cured product was obtained. Then, the moldability of the cured product obtained at each of the temperatures was evaluated.

### [Example 2]

### (Preparation of resin composition (2) for prepreg)

50 parts by mass of a mixture of polymethylene polyphenyl polyisocyanate and 4,4'-diphenylmethane diisocyanate ("Millionate MR-200", manufactured by Tosoh Corporation), 50 parts by mass of 4,4'-diphenylmethane diisocyanate, 66 parts by mass of 2-hydroxyethyl methacrylate (HEMA), 25 parts by mass of NEWPOL BPE-20 (manufactured by Sanyo Chemical Industries, Ltd.: EO adduct of bisphenol A, hydroxyl equivalent: 164 g/eq), 31 parts by mass of NEWPOL BPE-40 (manufactured by Sanyo Chemical Industries, Ltd.: EO adduct of bisphenol A, hydroxyl equivalent: 204 g/eq), and 3 parts by mass of a polymerization initiator ("Kayaester O" by Kayaku Nouryon Corporation, tert-butylperoxy-2-ethylhexanoate, 10-hour half-life temperature of 72°C) were mixed at room temperature (23°C), and the resulting mixture was placed into a polyethylene bag and subjected to aging at 45°C for 24 hours to obtain a resin composition (2) for prepreg (melt viscosity at 100°C: 375 Pa·s).

### (Production and evaluation of prepreg (2))

50 parts by mass of a mixture of polymethylene polyphenyl polyisocyanate and 4,4'-diphenylmethane diisocyanate ("Millionate MR-200", manufactured by Tosoh Corporation), 50 parts by mass of 4,4'-diphenylmethane diisocyanate, 66 parts by mass of 2-hydroxyethyl methacrylate (HEMA), 25 parts by mass of NEWPOL BPE-20 (manufactured by Sanyo Chemical Industries, Ltd.: EO adduct of bisphenol A, hydroxyl equivalent: 164 g/eq), 31 parts by mass of NEWPOL BPE-40 (manufactured by Sanyo Chemical Industries, Ltd.: EO adduct of bisphenol A, hydroxyl equivalent: 204 g/eq), and 3 parts by mass of a polymerization initiator ("Kayaester O" by Kayaku Nouryon Corporation, tert-butylperoxy-2-ethylhexanoate, 10-hour half-life temperature of 72°C) were mixed at room temperature (23°C), and the resulting mixture was applied to one surface of a polyethylene terephthalate film having been subjected to mold release treatment (manufactured by NIPPA CORPORATION, 50 µm, silicone mold release treatment). Then, by a hand lay-up method, carbon fibers ("TRK979PQRW", manufactured by Mitsubishi Chemical Corporation) were impregnated to achieve a carbon fiber content of 50% by mass. The same type of a film was placed on the resulting product and then aging was performed at 25°C for one week, whereby a prepreg (2) was produced. The gel time of the prepreg (2) was 300 seconds at 100°C and 110 seconds at 110°C.

### (Production and evaluation of cured product)

20 sheets of the prepreg (2) each were stacked, and then vacuum-packed using a vacuum packing device at an ultimate pressure of -90 kPa, and placed into an oven preheated to 100°C and to 110°C and held for 10 minutes to cure the prepreg, whereby a cured product was obtained. Then, the moldability of the cured product obtained at each of the temperatures was evaluated.

### [Comparative Example 1]

### (Production and evaluation of cured product)

20 sheets of the prepreg (1) each were stacked and then attached to a glass plate, and placed into an oven preheated to 100°C and to 110°C and held for 10 minutes to cure the prepreg, whereby a cured product was obtained. Then, the moldability of the cured product obtained at each of the temperatures was evaluated.

### [Comparative Example 2]

### (Production and evaluation of cured product)

20 sheets of the prepreg (2) each were stacked and then attached to a glass plate, and placed into an oven preheated to 100°C and to 110°C and held for 10 minutes to cure the prepreg, whereby a cured product was obtained. Then, the moldability of the cured product obtained at each of the temperatures was evaluated.

### [Comparative Example 3]

### (Preparation of resin composition (R1) for prepreg)

50 parts by mass of a mixture of polymethylene polyphenyl polyisocyanate and 4,4'-diphenylmethane diisocyanate ("Millionate MR-200", manufactured by Tosoh Corporation), 50 parts by mass of 4,4'-diphenylmethane diisocyanate, 66 parts by mass of 2-hydroxyethyl methacrylate (HEMA), 25 parts by mass of NEWPOL BPE-20 (manufactured by Sanyo Chemical Industries, Ltd.: EO adduct of bisphenol A, hydroxyl equivalent: 164 g/eq), 31 parts by mass of NEWPOL BPE-40 (manufactured by Sanyo Chemical Industries, Ltd.: EO adduct of bisphenol A, hydroxyl equivalent: 204 g/eq), and 3 parts by mass of a polymerization initiator ("Trigonox 122-80C" by Kayaku Nouryon Corporation, 1,1-di(tert-amylperoxy)cyclohexane, 10-hour half-life temperature of 87°C) were mixed at room temperature (23°C) and the resulting mixture was placed into a polyethylene bag and subjected to aging at 45°C for 24 hours to obtain a resin composition (R1) for prepreg (melt viscosity at 100°C: 375 Pa-s).

### (Production and evaluation of prepreg (R1))

50 parts by mass of a mixture of polymethylene polyphenyl polyisocyanate and 4,4'-diphenylmethane diisocyanate ("Millionate MR-200", manufactured by Tosoh Corporation), 50 parts by mass of 4,4'-diphenylmethane diisocyanate, 66 parts by mass of 2-hydroxyethyl methacrylate (HEMA), 25 parts by mass of NEWPOL BPE-20 (manufactured by Sanyo Chemical Industries, Ltd.: EO adduct of bisphenol A, hydroxyl equivalent: 164 g/eq), 31 parts by mass of NEWPOL BPE-40 (manufactured by Sanyo Chemical Industries, Ltd.: EO adduct of bisphenol A, hydroxyl equivalent: 204 g/eq), and 3 parts by mass of a polymerization initiator ("Trigonox 122-80C" by Kayaku Nouryon Corporation, 1,1-di(tert-amylperoxy)cyclohexane, 10-hour half-life temperature of 87°C) were mixed at room temperature (23°C), and the resulting mixture was applied to one surface of a polyethylene terephthalate film having been subjected to mold release treatment (manufactured by NIPPA CORPORATION, 50 µm, silicone mold release treatment). Then, by a hand lay-up method, carbon fibers ("TRK979PQRW", manufactured by Mitsubishi Chemical Corporation) were impregnated to achieve a carbon fiber content of 50% by mass. The same type of a film was placed on the resulting product and then aging was performed at 25°C for one week, whereby a prepreg (R1) was produced. The prepreg (R1) was not cured at 100°C and 110°C, hence the gel time of the prepreg (R1) was not able to be measured and evaluated. Then, the temperature was further increased to 120°C, 130°C, and 140°C. As a result, the prepreg (R1) was not still cured at 120°C, whereas, at 130°C, the gel time of the prepreg (R1) was 80 seconds, and, at 140°C, the gel time thereof was 50 seconds.

### (Production and evaluation of cured product)

20 sheets of the prepreg (R1) each were stacked, and then vacuum-packed using a vacuum packing device at an ultimate pressure of -90 kPa, and placed into an oven preheated to 100°C and to 110°C and held for 10 minutes to cure the prepreg, whereby a cured product was obtained. Then, the moldability of the cured product obtained at each of the temperatures was evaluated.

**[Table 1]**

| | Exampl e 1 | Example 2 | Comparativ e Example 1 | Comparati ve Example 2 | Comparativ e Example 3 |
|---|---|---|---|---|---|
| Prepreg | (1) | (2) | (1) | (2) | (R1) |
| Gel time (sec) at 100°C | 90 | 300 | 90 | 300 | Unmeasurab le |
| Gel time (sec) at 110°C | 30 | 110 | 90 | 110 | Unmeasurab le |
| Moldabilit y at 100°C | ○ | × | × | × | × |
| Moldabilit y at 110°C | ○ | ○ | × | × | × |
| Interlamin ar shear strength (Mpa) of cured plate at 100°C | ○ | Cured product not obtainab le | × | Cured product not obtainabl e | Cured product not obtainable |
| | 65 | | 39 | | |
| Interlamin ar shear strength (Mpa) of cured plate at 110°C | ○ | ○ | × | × | Cured product not obtainable |
| | 65 | 58 | 39 | 32 | |

From the evaluation results above, it was confirmed that, in Example 1, a desired prepreg was used to undergo the step of vacuum-pressurization at 100°C, whereby a cured product having excellent moldability and high interlaminar shear strength was obtained. Furthermore, it was confirmed that, in Example 2, a desired prepreg was used to undergo the step of vacuum-pressurization at 110°C in accordance with the decomposition temperature of the organic peroxide, whereby a cured product having excellent moldability and high interlaminar shear strength was obtained.

In contrast, it was confirmed that, in Comparative Examples 1 and 2, the same prepregs as those in Examples 1 and 2 were used, respectively, but, the step of vacuum-pressurization was not performed, and hence, the resulting cured products had poorer moldability and lower interlaminar shear strength. In Example 2 and Comparative Example 2, an attempt was made to obtain a cured product (cured plate) by heating the prepreg at 100°C, but, since the 10-hour half-life temperature of the organic peroxide was higher than that in Example 1, the low-temperature curability of the prepreg was poorer, hence, no cured product was obtained.

In Comparative Example 3, the 10-hour half-life temperature of the polymerization initiator (B) used in the production of the prepreg was not within the desired range, but was higher, and, as a result, the performance of the organic peroxide was insufficient at a curing temperatures not more than 120°C, the gel time was not able to be measured, and no cured product was obtained.

### Industrial Applicability

According to the present invention, bonding a cured product obtained by curing a specific prepreg under specific conditions to a structure leads to the reduction of the construction period and the improvement of workability owing to the fast curability (short-time curability) and low-temperature curability of the prepreg, and integrally bonding the cured product to a surface of the structure allows the resulting structure to have sufficient mechanical strength for reinforcement and repair, and therefore, the prepreg is applicable to automobile components, railway vehicle components, aerospace craft components, ship components, housing equipment components, sporting components, light vehicle components, building and civil engineering components, casings of OA equipment, and the like, and is particularly preferably applied to housing equipment components, building and civil engineering components, and the like.

## Claims

1. A method for reinforcing and repairing a structure, the method comprising:
a) a step of stacking and shaping a prepreg according to a shape of a surface of the structure;
b) a step of vacuum-pressurizing the prepreg stacked and shaped;
c) a step of heating and curing the prepreg vacuum-pressurized, to produce a cured product of the prepreg; and
d) a step of bonding the cured product to the surface of the structure, wherein
the prepreg includes: a resin composition including an ethylenically unsaturated group-containing resin (A) and a polymerization initiator (B); and reinforcement fibers (C), and
the polymerization initiator (B) has a 10-hour half-life temperature of 60°C to 75°C.

2. The method according to claim 1, wherein the ethylenically unsaturated group-containing resin (A) is urethane (meth)acrylate and/or epoxy (meth)acrylate.

3. The method according to claim 2, wherein the urethane (meth)acrylate is a reaction product of a polyisocyanate compound and a hydroxyl group-containing compound including a compound having a hydroxyl group and a (meth)acryloyl group.

4. The method according to claim 3, wherein the polyisocyanate compound is at least one polyisocyanate selected from the group consisting of 2,4'-diphenylmethane diisocyanate, 4,4'-diphenylmethane diisocyanate, carbodiimide-modified 4,4'-diphenylmethane diisocyanate, and polymethylene polyphenylpolyisocyanate.

5. The method according to any one of claims 1 to 4, wherein the prepreg is preferably cured at 120°C or lower within 15 minutes.

6. The method according to any one of claims 1 to 5, wherein a gel time (at 100°C) of the prepreg is 50 seconds to 350 seconds.

7. The method according to any one of claims 1 to 7, wherein a melt viscosity (at 100°C) of the resin composition is 0.4 Pa·s to 900 Pa·s in a dynamic viscoelasticity measurement performed at a temperature increase rate of 15°C/min and a frequency of 1 Hz.

8. A structure obtained by the method for reinforcing and repairing a structure according to any one of claims 1 to 7.
